# Europäisches Patentamt

## European Patent Office

## Office européen des brevets

(11) Publication number: **0 047 668**
**B1**

(12) **EUROPEAN PATENT SPECIFICATION**

(45) Date of publication of patent specification: **21.11.85**

(51) Int. Cl.⁴: **F 16 H 47/08**

(21) Application number: **81304107.6**

(22) Date of filing: **08.09.81**

(54) **Automatic transmission with overdrive device.**

(30) Priority: **09.09.80 JP 125435/80**

(43) Date of publication of application:
**17.03.82 Bulletin 82/11**

(45) Publication of the grant of the patent:
**21.11.85 Bulletin 85/47**

(84) Designated Contracting States:
**DE FR GB IT SE**

(56) References cited:
**DE-A-2 944 900**
**DE-A-2 945 232**
**US-A-2 829 542**
**US-A-3 063 308**
**US-A-4 010 660**

**ATZ 72 (1970) 4, Seite 118**

(73) Proprietor: **FUJI JUKOGYO KABUSHIKI KAISHA**
**7-2 Nishishinjuku 1-chome Shinjuku-ku**
**Tokyo (JP)**

(72) Inventor: **Takano, Toshio**
**1-3-2 Sakaecho Hamuramachi**
**Nishitama-gun Tokyo (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

Courier Press, Leamington Spa, England.

# Description

The present invention relates to an automatic transmission provided with an overdrive device of the type in which a torque converter, an automatic transmission and a fluid reduction gear are integrally constructed in one unit.

In a conventional automatic transmission with an overdrive device, a planetary gear device is used for increasing the rotation speed of the output of the transmission. Particularly, in a three-speed change gear transmission system, the power transmission flow is arranged on an axis. In such an arrangement, a pair of planetary gear devices must be provided, which further requires the provision of at least two transmitting devices comprising a clutch band and one-way clutch. Such a construction makes the apparatus large and complicated, which also causes complications in the hydraulic control system.

One example of a known type of automatic transmission of this kind is disclosed in DE—A—29 45 232. This includes a torque converter comprising an impeller 14 arranged to pump oil to drive a turbine 18, an automatic gearbox apparatus comprising a planetary gear device and fluid operated brake and clutch devices connected to the output shaft 24 of the turbine 18, the transmission comprising a final reduction gear device 12 connected to an output shaft of said automatic transmission apparatus, the output shaft being arranged at a distance from the output shaft 24 of the turbine and the automatic transmission also including engaging means for an overdrive gear ratio.

Accordingly the present invention provides (a) an automatic transmission including a torque converter comprising an impeller arranged to pump oil to drive a turbine, an automatic gearbox apparatus comprising a planetary gear device and fluid operated brake and clutch devices connected to the output shaft of said turbine; (b) the transmission comprising a final reduction gear device connected to an output shaft of said automatic transmission apparatus, said output shaft being arranged at a distance from the output shaft of the turbine; (c) the automatic transmission including engaging means for an overdrive gear ratio; (d) valve means for supplying oil to said overdrive gear ratio engaging means, (e) an oil pump driven by said impeller through an oil pump drive shaft for supplying oil under pressure to the fluid operated brake and clutch devices; characterised in that (f) the overdrive device comprises an overdrive clutch and overdrive gears, said overdrive clutch being connected between said output shaft of said turbine and overdrive gears, and an intermediate shaft connected between an output shaft of said overdrive gears and said final reduction gear device; (g) said intermediate shaft being arranged at a distance from said output shaft of the turbine and said overdrive device comprising a train of gears between the axes of said shafts. In this way transmission elements in the automatic transmission may also be used as elements for the overdrive device, thereby simplifying the construction and effecting other improvements.

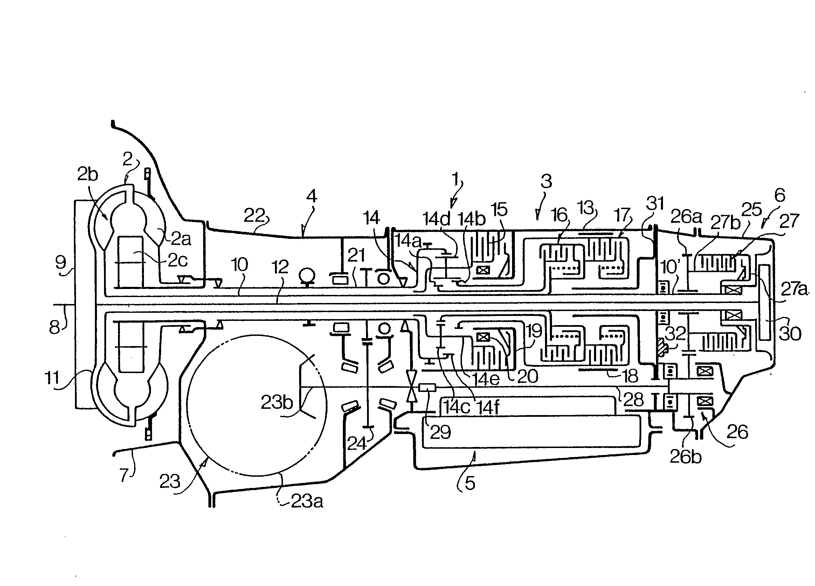

One embodiment of the present invention will now be described by way of example with reference to the accompanying drawing which is a diagrammatic cross-sectional view of an automatic transmission system.

In the figure, numeral 1 generally designates a trans-axle type transmission for driving the front wheels of a vehicle which comprises a torque converter 2, three-speed automatic transmission device 3, a final reduction device 4 disposed between the automatic transmission apparatus 3 and the torque converter 2, a valve block 5 of hydraulic control means provided in a lower part of the automatic transmission device 3, and an overdrive device 6 arranged in a rear part of automatic transmission apparatus 3 at the opposite end to the torque converter 2.

The torque converter 2 is in a converter housing 7 containing a pump impeller 2a, a turbine 2b and a stator 2c. The pump impeller 2a in is direct connection with an engine crankshaft 8 through a drive plate 9. A turbine shaft 10 extends from the turbine 2b and an oil pump driving shaft 12 extends from a converter cover 11 provided integrally with the drive plate 9. The pump impeller 2a is rotated by the engine through the crankshaft 8 to rotate the turbine 2b by the oil flow regulated by the stator 2c.

The automatic transmission apparatus 3 has a transmission case 13 in which a planetary gear 14, a low-and-reverse brake 15, a forward clutch 16, and reverse clutch 17 are arranged in that order. The turbine shaft 10 connected to the torque converter 2 is connected to a forward sun gear 14a of the planetary gear 14 through the forward clutch 16, and at the same time connected to a reverse sun gear 14b through the reverse clutch 17 to apply the output of the turbine shaft 10 thereto. Further, a brake band 18 is provided on the drum side of the reverse clutch 17 to lock the reverse sun gear 14b. In the planetary gear 14, a short pinion 14c engaging with the sun gear 14a and a long pinion 14d engaging with the sun gear 14b are supported in a carrier 14e which supports the low-and-reverse brake 15. The carrier is locked by a one-way clutch 20 provided between the low-and-reverse brake 15 and a centre support 19. An output shaft 21 is extended from a ring gear 14f engaging with the long pinion 14d to the torque converter.

The front-wheel final reduction device 4 has a case 22 secured between the converter housing 7 and the transmission case 13. The case 22 contains a crown gear 23a of a differential mechanism 23 for front-wheels under units including the turbine shaft 10. Output shaft 21 is coupled with a drive pinion 23b through a reduction gear 24 for transmitting the power to the crown gear 23a.

Further, the valve block 5 of hydraulic control device contains therein various valves and oil passages (not shown). The hydraulic control device is adapted to supply or discharge the pressure oil to or from servo mechanism of the low-and-reverse brake 15 and clutches 16, 17 and the brake band 18 of the automatic transmission apparatus 3 in accordance with the transmitting pattern according to the relation between vehicle speed and engine speed.

The overdrive device 6 of the present invention is provided within a transmission cover 25 which is fixed to the rear end of the transmission case 13. The turbine shaft 10 extends into the transmission cover 25 to form an extension 10'. An overdrive gear device 26 and an overdrive clutch 27 are disposed on the extension 10'. The overdrive gear device 26 comprises a large drive gear 26a and a small driven gear 26b which engage with each other. The drive gear 26a is rotatably mounted on the extension 10' and the driven gear 26b is secured to a rearward extension of the drive pinion 23b, so that a speed-up gear device is provided. An overdrive clutch 27 which is hydraulic comprises a drum 27a secured to the extension 10' and a hub 27b secured to the drive gear 26a, and is adapted to establish or cut off the connection of the turbine shaft 10 with drive gear 26a. Further, the driven gear 26b is connected to the drive pinion 23b of the front-wheels final reduction device 4 through an intermediate shaft 28 and a spline joint 29. An oil pump 30 is attached to the cover 25 and connected to the oil pump driven shaft 12.

A clutch support 31 is provided with a valve 32 for changing of overdrive. The valve 32 is adapted to discharge the oil from forward clutch 16 and to supply the oil to the overdrive clutch 27 to engage the overdrive, when the vehicle reaches a suitable operating conditions.

As a result of this construction, when oil is discharged from the overdrive clutch 27, the overdrive gear device 26 is disengaged from the extension 10'. If the forward clutch 16 of the automatic transmission apparatus 3 is engaged, power from the engine crankshaft 8 is transmitted to the turbine shaft 10 through the torque converter 2 and further to the forward sun gear 14a of the planetary gear 14 to establish a forward driving speed condition. When the carrier 14e is locked by the one-way clutch 20 or the low-and-reverse brake 15, the largest gear ratio transmission is provided. From the output shaft 21, the output is transmitted to the drive pinion 23b of the differential mechanism 23 through the reduction gear 24 and further to the front-wheels through the crown gear 23a to establish the 1st-speed driving condition. When the vehicle reaches a predetermined speed, the brake band 18 in place of the low-and-reverse brake 15 actuates to lock the reverse sun gear 14b. Thus, power transmission occurs at a gear ratio smaller than the above mentioned 1st-speed, that is, the 2nd-speed. When the vehicle speed is further increased, the reverse clutch 17 engages instead of the brake band 18. Accordingly, the planetary gear device is integrated and the turbine shaft 10 and the output shaft 21 are directly connected with each other to transfer the output from the turbine shaft 10 to the front-wheels, as the 3rd-speed transmission.

If, as an example, during high speed driving in the 3rd-speed condition, when the overdrive clutch 27 is engaged after disengaging the forward clutch 16 of the automatic transmission apparatus by the valve 32, the planetary gear 14 becomes incapable of automatic transmission operation because no power is applied to the forward sun gear 14a. On the contrary, the turbine shaft 10 is engaged with the overdrive gear device 26 because of the engagement of the overdrive clutch 27. Thus, power from the turbine shaft 10 is transmitted to the overdrive gear device 26 and the speed is increased by the drive and the driven gears 26a and 26b. The power from the intermediate shaft 28 of the driven gear 26b is transmitted to the front wheels through the drive pinion 23b and crown gear 23a of the differential mechanism 23. Thus, the vehicle is driven through the overdrive gear device 26.

In this condition, the power transmitted to the turbine shaft 10 through the torque converter is applied to the reverse sun gear 14b of the planetary gear 14 because of engagement of the reverse clutch 17 in the 3rd-speed and the power transmitted to the drive pinion 23b of the differential mechanism 23 is reversely applied to the ring gear 14f of the planetary gear 14 through the reduction gear 24 and the output shaft 21. However, the carrier 14e is free to rotate, since the one-way clutch 20 and the low-and-reverse brake 15 are released. As a result, the planetary gear 14 idles without bringing about any effect.

Changing to the overdrive gear device from the 1st-speed drive or the 2nd-speed drive may also be performed in the same way as above described. Operation in the reverse way causes the overdrive condition to release and to make the power transmission by the automatic transmission apparatus 3.

Using this construction the overdrive gear device is attached to a standard type of automatic transmission without changing its construction, thus simplifying the design of the device.

**Claims**

1. An automatic transmission including a torque converter (2) comprising an impeller (2a) arranged to pump oil to drive a turbine (2b), an automatic gearbox apparatus comprising a planetary gear device (14) and fluid operated brake and clutch devices (16, 17) connected to the output shaft (10) of said turbine (2b); (b) the transmission comprising a final reduction gear device (23a, 23b) connected to an output shaft of said automatic transmission apparatus, said output shaft being arranged at a distance from the output shaft 24 of the turbine; (c) the automatic transmission including engaging means (27) for an overdrive gear ratio; (d) valve means for supplying oil to said overdrive gear ratio engaging means; (e) an oil pump (30) driven by said impeller through an oil pump drive shaft (12) for supplying oil under pressure to said fluid operated brake and clutch devices; characterised in that (f) the overdrive device (6) comprises an overdrive clutch (27) and overdrive gears (26a, 26b), said overdrive clutch (27) being connected between said output shaft (10) of said turbine (26) and overdrive gears, and an intermediate shaft (28) connected between an output shaft of said overdrive gears (26a, 26b), and said final reduction gear device (23a, 23b); (g) said intermediate shaft (28) being arranged at a distance from said output shaft (10) of the turbine and said overdrive device comprising a train of gears between the axes of said shafts (10, 28).

2. An automatic transmission according to claim 1 wherein said overdrive device is disposed at the rear end of said automatic transmission apparatus.

3. An automatic transmission according to claim 1 wherein said overdrive clutch is connected to an extension of said output shaft of said turbine.

**Patentansprüche**

1. Automatische Kraftübertragungsvorrichtung mit

(a) einem Drehmomentwandler (2), dessen Pumpenrad (2a) Öl zum Antrieb einer Turbine (2b) fördert, an deren Abtriebswelle (10) ein Planetengetriebe (14) sowie hydraulisch betätigte Brems- und Kupplungseinrichtungen (16, 17) eines automatischen Getriebes angeschlossen sind;

(b) einem abschließenden Untersetzungsgetriebe (23a, 23b), das an einer Abtriebswelle des automatischen Getriebes angeschlossen ist, wobei diese Abtriebswelle von der Abtriebswelle (10) der Turbine beabstandet ist;

(c) einer Kupplungseinrichtung (27) für eine Overdrive-Übersetzung;

(d) einer Ventileinrichtung für die Zufuhr von Öl zu der Kupplungseinrichtung der Overdrive-Übersetzung;

(e) einer Ölpumpe (30), die von dem Pumpenrad mittels einer Ölpumpenantriebswelle (12) angetrieben wird, um Öl unter Druck zu den hydraulisch betätigten Brems- und Kupplungseinrichtungen zuzuführen; dadurch gekennzeichnet, daß

(f) eine Overdrive-Einrichtung (6) eine Overdrive-Kupplung (27) und Overdrive-Zahnräder (26a, 26b) aufweist, wobei die Overdrive-Kupplung zwischen die Abtriebswelle (10) der Turbine (26) und die Overdrive-Zahnräder sowie eine Zwischenwelle (28) zwischen eine Abtriebswelle der Overdrive-Zahnräder (26a, 26b) und das abschließende Untersetzungsgetriebe (23a, 23b) eingeschaltet ist,

(g) die Zwischenwelle (28) von der Abtriebswelle (10) der Turbine beabstandet ist und die Overdrive-Einrichtung einen Getriebezug zwischen den Achsen der Wellen (10, 28) aufweist.

2. Automatische Kraftübertragungsvorrichtung nach Anspruch 1, dadurch gekennzeichnet, daß die Overdrive-Einrichtung am hinteren Ende angeordnet ist.

3. Automatische Kraftübertragungsvorrichtung nach Anspruch 1, dadurch gekennzeichnet, daß die Overdrive-Kupplung an einer Verlängerung der Abtriebswelle der Turbine angeschlossen ist.

**Revendications**

1. Transmission automatique incluant:

a) un convertisseur de couple (2) comprenant une roue (2a) conçue pour pomper de l'huile à une turbine (2b), une boîte de vitesses automatique comprenant un dispositif à engrenage différentiel (14) et un frein à fluide, ainsi que des dispositifs d'accouplement (16, 17) reliés à l'arbre de sortie (10) de ladite turbine (2b);

b) la transmission comprenant un dispositif réducteur final (23a, 23b) relié à l'arbre de sortie dudit dispositif de transmission automatique, ledit arbre de sortie étant disposé à une certaine distance de l'arbre de sortie (24) de la turbine;

c) la transmission automatique incluant des moyens (27) pour établir un rapport surmultiplié;

d) une valve pour fournir de l'huile aux moyens établissant le rapport surmultiplié;

e) une pompe à huile (30) entraînée par ladite roue au moyen d'un arbre (12) afin d'alimenter en huile sous pression ledit frein à fluide et lesdits dispositifs d'accouplement; caractérisée en ce que

f) le dispositif de surmultiplication (6) comprend un accouplement (27) et un engrenage (26a, 26b), ledit accouplement (27) étant monté entre ledit arbre de sortie (10) de ladite turbine (26) et l'engrenage de surmultiplication, cependant qu'un arbre intermédiaire (28) est monté entre un arbre de sortie dudit engrenage de surmultiplication (26a, 26b), et ledit dispositif réducteur final (23a, 23b);

g) ledit arbre intermédiaire (28) étant disposé à une certaine distance de l'arbre de sortie (10) de la turbine et ledit dispositif de surmultiplication comprenant un train d'engrenages entre les axes desdits arbres (10, 28).

2. Transmission automatique selon la revendication 1, caractérisé en ce que le dispositif de surmultiplication est disposé à l'extrémité arrière dudit dispositif de transmission automatique.

3. Transmission automatique selon la revendication 1, caractérisé en ce que l'accouplement de surmultiplication est relié à un prolongement de l'arbre de sortie de la turbine.